(19) Europäisches Patentamt
European Patent Office
Office européen des brevets

(11) **EP 1 519 017 B1**

(12) **EUROPEAN PATENT SPECIFICATION**

(45) Date of publication and mention
of the grant of the patent:
**15.06.2011 Bulletin 2011/24**

(21) Application number: **04022738.1**

(22) Date of filing: **23.09.2004**

(51) Int Cl.:
*F02B 37/013* (2006.01)  *F02B 37/18* (2006.01)
*F02B 37/16* (2006.01)

(54) **Turbocharging system**

Turboladersystem

Système de suralimentation

(84) Designated Contracting States:
**DE FR IT**

(30) Priority: **26.09.2003 JP 2003334739**

(43) Date of publication of application:
**30.03.2005 Bulletin 2005/13**

(73) Proprietor: **Toyota Jidosha Kabushiki Kaisha
Toyota-shi, Aichi-ken, 471-8571 (JP)**

(72) Inventor: **Sasaki, Shoji
Toyota-shi,
Aichi-ken, 471-8571 (JP)**

(74) Representative: **Winter, Brandl, Fürniss, Hübner,
Röss, Kaiser, Polte - Partnerschaft
Alois-Steinecker-Strasse 22
85354 Freising (DE)**

(56) References cited:
**DE-A- 10 015 291      DE-A- 10 144 663
US-A- 5 142 866      US-A- 5 408 979
US-A- 6 112 523**

• **PATENT ABSTRACTS OF JAPAN vol. 0081, no. 91 (M-322), 4 September 1984 (1984-09-04) & JP 59 082526 A (HINO JIDOSHA KOGYO KK), 12 May 1984 (1984-05-12)**

**Description**

BACKGROUND OF THE INVENTION

1. Field of the Invention

The invention relates to a turbocharging system.

2. Description of the Related Art

One type of known turbocharger-equipped engine is an engine with a so-called two-stage turbocharger system that performs turbocharging in two stages, first with a low pressure turbocharger and then with a high pressure turbocharger, both of which are provided in intake and exhaust passages of the engine. One known type of two-stage turbocharger system determines which turbocharger (i.e., the low pressure turbocharger or the high pressure turbocharger) to use depending on the engine speed. More specifically, in the low engine speed range, turbocharging is performed mainly with a small turbocharger suitable for operation in a range where the amount of airflow is small. Conversely, in the high engine speed range, turbocharging is performed only with a large turbocharger suitable for operation in a range where the amount of airflow is large. As a result, appropriate turbocharging is able to be performed throughout the entire load range of the engine. Such two-stage turbocharger systems are disclosed in JP(A) 4-136424, or JP 59082526.

Conventional systems such as this have the following kinds of problems, however. That is, a two-stage turbocharger system is typically structured such that, in order to realize the two-stage turbocharging described above, the exhaust gas from the engine first flows into the high pressure turbocharger and then into the low pressure turbocharger. This means that the exhaust gas flow meets two resistance twice, once from (the turbine of) the high pressure turbocharger and again from (the turbine of) the low pressure turbocharger (the resistance from the low pressure turbocharger in particular is quite high). As a result, back pressure increases in the exhaust pipe, which reduces engine efficiency.

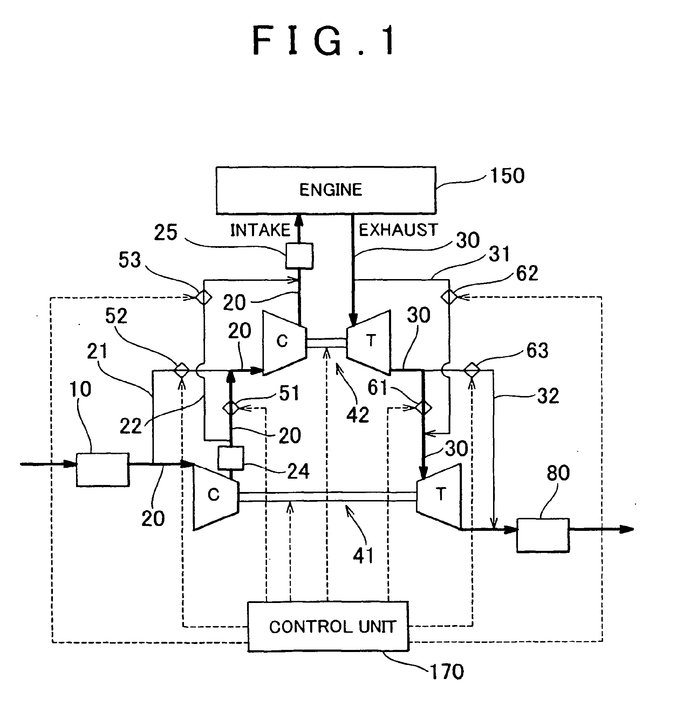

Therefore, the two-stage turbocharger system of the foregoing publication is structured such that when the engine is operating in the high speed range, the exhaust gas does not flow through the high pressure turbocharger so that turbocharging is only performed with the low pressure turbocharger. Even in this case, however, the flow resistance against the exhaust gas downstream of the high pressure turbocharger (i.e., on the turbine side) can not be sufficiently suppressed because the exhaust gas still flows through the low pressure turbocharger (see FIG. 1 of JP(A) 4-136424).

SUMMARY OF THE INVENTION

In view of the foregoing problems, this invention thus provides a turbocharging system capable of achieving a smooth flow of flowing fluid for operating the turbocharging system by suppressing flow resistance on the turbine side.

Accordingly, one aspect of this invention relates to a turbocharging system that is provided with a low pressure turbocharger and high pressure turbocharger, the turbocharging system being characterised in that it is provided with a cut-off valve which cuts off communication between an outlet of a turbine of the high pressure turbocharger and an inlet of a turbine of the low pressure turbocharger; a high pressure side bypass which bypasses the turbine of the high pressure turbocharger and the cut-off valve, and introduces a flowing fluid for operating the turbocharging system to the turbine of the low pressure turbocharger; a high pressure side bypass opening and closing valve provided in the high pressure side bypass; a low pressure side bypass which bypasses the cut-off valve and the turbine of the low pressure turbocharger, and introduces the flowing fluid downstream of the turbine of the low pressure turbocharger; and a low pressure side bypass opening and closing valve provided in the low pressure side bypass.

According to this turbocharging system, communication between the low pressure turbocharger and the high pressure turbocharger is enabled by opening the cut-off valve and closing both the high and low pressure side bypass opening and closing valves. In this case, the cut-off valve controls communication between the outlet of the turbine of the high pressure turbocharger and the inlet of the turbine of the low pressure turbocharger, so the flowing fluid for operating the turbocharging system is able to first pass through the high pressure turbocharger and then through the low pressure turbocharger (hereinafter, this flow path will be referred to as "first flow mode").

On the other hand, communication between the low pressure turbocharger and the high pressure turbocharger is cut off by closing the cut-off valve and opening both the high and low pressure side bypass opening and closing valves. In this case, some of the flowing fluid for operating the turbocharging system passes through the high pressure side bypass and reaches the low pressure turbine, while the rest of the flowing fluid for operating the turbocharging system goes directly to the high pressure turbocharger and further bypasses the low pressure turbine (the latter flow path which bypasses the low pressure turbocharger will hereinafter be referred to as "second flow mode").

Thus it is possible to achieve two turbocharging modes, i.e., the first flow mode and the second flow mode. As a result, if there is a fear of an increase in back pressure when the first flow mode is executed, for example, the mode may be changed to the second flow mode or vice versa. In the second flow mode, the flowing fluid flows into the low pressure turbocharger and the high pressure turbocharger in parallel, as described above, so the flow path area of the flowing fluid increases, making it possible to suppress an increase in flow resistance. Accordingly, it is possible to suppress an increase in flow resistance and achieve a smooth flow of the flowing fluid for operating the turbocharging system.

Also, this turbocharging system preferably includes a turbocharging flow cut-off valve which cuts off communication between the outlet of a compressor of the low pressure turbocharger and the inlet of a compressor of the high pressure turbocharger; a low pressure side turbocharging flow bypass which bypasses the compressor of the low pressure turbocharger and the turbocharging flow cut-off valve, and which introduces turbocharging flowing fluid to the compressor of the high pressure turbocharger; a low pressure side turbocharging flow bypass opening and closing valve provided in the low pressure side turbocharging flow bypass; a high pressure side turbocharging flow bypass which bypasses the turbocharging flow cut-off valve and the compressor of the high pressure turbocharger and which introduces turbocharging flowing fluid downstream of the compressor of the high pressure turbocharger; and a high pressure side turbocharging flow bypass opening and closing valve provided in the high pressure side turbocharging flow bypass.

According to the foregoing turbocharging system, first, it is possible to achieve a preferable structure on the turbocharging flowing fluid side, thus making it possible to preferably achieve so-called two-stage turbocharging and twin turbocharging. That is, in order to achieve two-stage turbocharging, it is sufficient to have the turbocharging flow cut-off valve open and both the high pressure side turbocharging flow bypass opening and closing valve and the low pressure side turbocharging flow bypass opening and closing valve close. Accordingly, the turbocharging flowing fluid first flows into the low pressure turbocharger and then into the high pressure turbocharger. Because the high pressure side turbocharging flow bypass opening and closing valve and the low pressure side turbocharging flow bypass opening and closing valve are both closed at this time, intake air does not flow into the high pressure side turbocharging flow bypass or the low pressure side turbocharging flow bypass. In order to achieve twin turbocharging, on the other hand, it is sufficient to have the turbocharging flow cut-off valve close and both the high pressure side turbocharging flow bypass opening and closing valve and the low pressure side turbocharging flow bypass opening and closing valve open. Accordingly, the turbocharging flowing fluid flows into both the low pressure turbocharger and the high pressure turbocharger in parallel.

Performing twin turbocharging when the flow rate of the turbocharging flowing fluid is large, for example, is beneficial in that the flow of the turbocharging flowing fluid meets no sequential resistance in the two stages of the low pressure turbocharger and the high pressure turbocharger, thus enabling pressure loss to be minimized.

In addition to the foregoing structure, the turbocharging system may further be provided with a first intercooler and a second intercooler. The first intercooler may be provided upstream of the turbocharging flow cut-off valve and upstream of a branching point of the high pressure side turbocharging flow bypass and a turbocharging flow pipe in which the turbocharging flow cut-off valve is provided. The second intercooler may be provided downstream of a branching point of a turbocharging flow pipe extending from the outlet of the compressor of the high pressure turbocharger and the high pressure side turbocharging flow bypass. According to this construction, the appropriate arrangement of the first intercooler and the second intercooler enables fluid from both the compressor of the low pressure turbocharger and the compressor of the high pressure turbocharger to be preferably cooled.

The turbocharging system may also be provided with an engine which is turbocharged by the low pressure turbocharger and the high pressure turbocharger. Further, the turbocharging system may be structured such that when the speed of the engine is equal to, or greater than, a predetermined speed, the cut-off valve and the turbocharging flow cut-off valve close and the high pressure side bypass opening and closing valve, the low pressure side bypass opening and closing valve, the high pressure side turbocharging flow bypass opening and closing valve, and the low pressure side turbocharging flow bypass opening and closing valve open.

According to this construction, when the engine speed becomes equal to, or greater than, a predetermined speed, i.e., when the engine is operating in a relatively high speed range, the second flow mode, or twin turbocharging, is executed. When the engine is operating in the high speed range, the back pressure increases and there is a tendency for the intake air flow rate to increase. Performing twin turbocharging at this time therefore enables this increase in back pressure, as well as a pressure loss in the intake air, to be suppressed.

Further, the predetermined speed may be set according to the load on the engine. The predetermined speed at this time is preferably a constant speed when the load on the engine is heavy, and a lower speed than the constant speed when the load on the engine is light.

According to this construction, for example, when the load on the engine is relatively light, twin turbocharging can be performed even when the engine is operating in a relatively low speed range. As a result, when the load is relatively light, i.e., when it is thought that there is not much need for turbocharging, twin turbocharging, more so than two-stage turbocharging, can be performed without any particular problems occurring. Furthermore, doing so furthermore enables the pressure loss on the side of the flowing fluid which operates the turbocharging system to be reduced. This is because the flow path area of the flowing fluid which operates the turbocharging system increases, as described above.

Also, the high pressure turbocharger may have a lower capacity than the low pressure turbocharger. In addition, the turbocharging system may further be provided with controlling means for adjusting boost pressures of the high pressure turbocharger and the low pressure turbocharger so as to keep the ratio of a turbocharging flowing fluid quantity for the high pressure turbocharger to the turbocharging flowing fluid quantity for the low pressure turbocharger equal to the ratio of a turbocharging flowing fluid quantity with which the compression efficiency is the greatest for the high pressure turbocharger to the turbocharging flowing fluid quantity with which the compression efficiency is the greatest for the low pressure turbocharger.

With the turbocharging system of this structure, first, it is possible to suitably perform two-stage turbocharging because the high pressure turbocharger has a lower capacity than the low pressure turbocharger. In addition, providing the controlling means for adjusting the boost pressures of the high and low pressure turbos enables the boost pressures of the turbos to be adjusted so that they are substantially equal, for example. This in turn enables twin turbocharging to be suitably performed. That is, it is possible to suitably perform both two-stage turbocharging and twin turbocharging.

In addition, the boost pressures are adjusted so as to keep the ratio of the turbocharging flowing fluid quantity for the high pressure turbocharger to the turbocharging flowing fluid quantity for the low pressure turbocharger equal to the ratio of the turbocharging flowing fluid quantity with which the compression efficiency is the greatest for the high pressure turbocharger to the turbocharging flowing fluid quantity with which the compression efficiency is the greatest for the low pressure turbocharger. Accordingly, when controlling the boost pressures of both the low and high pressure turbos so that they are substantially equal, it is possible to have the turbos operate with same level of efficiency without, i.e., it is possible to avoid a case in which one turbocharger operates with high efficiency and the other turbocharger operates with low efficiency.

Further in the foregoing turbocharging system, when more turbocharging is required after the turbocharging flowing fluid quantity supplied to the high pressure turbocharger has reached a predetermined upper limit quantity, the boost pressure of the high pressure turbocharger and the boost pressure of the low pressure turbocharger may be adjusted so that the turbocharging flowing fluid quantity supplied to the high pressure turbocharger is fixed at the predetermined upper limit quantity.

This kind of structure makes it possible to achieve the following effects. That is, let us suppose that there is a target value that needs to be achieved now (a value of the flow rate of a turbocharging flowing fluid supplied to the turbocharger or the opening amount of a variable nozzle in the turbocharger, which is able to primarily determine, either directly or indirectly, a value of the boost pressure, corresponds to the target value in this case). In this case, it would normally be fundamentally desirable that the target value be reached by control over both the low and high pressure turbos, as was described with the modes which are the premise of this structure. In this case, however, because the high pressure turbocharger has a lower capacity than does the low pressure turbocharger, it is conceivable that the turbocharging flowing fluid quantity supplied to the high pressure turbocharger may reach the upper limit while the control is in the middle of being executed. If this happens, it becomes difficult to control the high pressure turbocharger, in which case it would no longer be desirable to achieve the target value.

Thus, according to the turbocharging system of the foregoing construction, it is possible to suitably adjust the boost pressure even in the above-described circumstance. This is because by performing control over the low pressure turbocharger while the turbocharging flowing fluid quantity supplied to the high pressure turbocharger is fixed at the upper limit, the low pressure turbocharger is used to do, i.e., compensate for, the work that initially was to be done by the high pressure turbocharger (i.e., the portion of the work that should be done by the high pressure turbocharger when the target value is reached).

That is, even after the turbocharging flowing fluid quantity supplied to the high pressure turbocharger, which has a smaller capacity, reaches the predetermined upper limit and the high pressure turbocharger has become difficult to control, it is still possible to suitably adjust the boost pressure, as described above.

As described above, the exemplary embodiment makes it possible to suppress the flow resistance on the turbine side and achieve a smooth flow of the flowing fluid which operates the turbocharging system.

BRIEF DESCRIPTION OF THE DRAWINGS

The above-mentioned objects, features, advantages, technical and industrial significance of this invention will be better understood by reading the following detailed description of preferred embodiments of the invention, when considered in connection with the accompanying drawings, in which:

FIG 1 is a view of an example construction of a turbocharging system according to a first exemplary embodiment of the invention;
FIG. 2 is an view illustrating the criteria for switching between two-stage turbocharging and twin turbocharging in the turbocharging system shown in FIG. 1;
FIGS. 3A and 3B are views illustrating the turbocharging mode realized with the turbocharging system shown in FIG. 1, with FIG. 3A showing two-stage turbocharging and FIG. 3B showing twin turbocharging;

FIG. 4 is a flowchart showing the flow in a boost pressure adjusting routine according to a second exemplary embodiment of the invention;

FIG. 5 is a flowchart showing the flow of a process corresponding to step S 100 in FIG. 4, i.e., a routine for determining an opening amount VN1 of a variable nozzle of a low pressure TC;

FIG. 6 is a graph showing a change in the turbine flow rate in response to a change in the variable nozzle opening amount;

FIG. 7 is a graph showing a change in the overall turbocharger efficiency in response to a change in the variable nozzle opening amount;

FIG. 8 is a graph showing a change in compressor efficiency in response to a change in the compressor flow rate; and

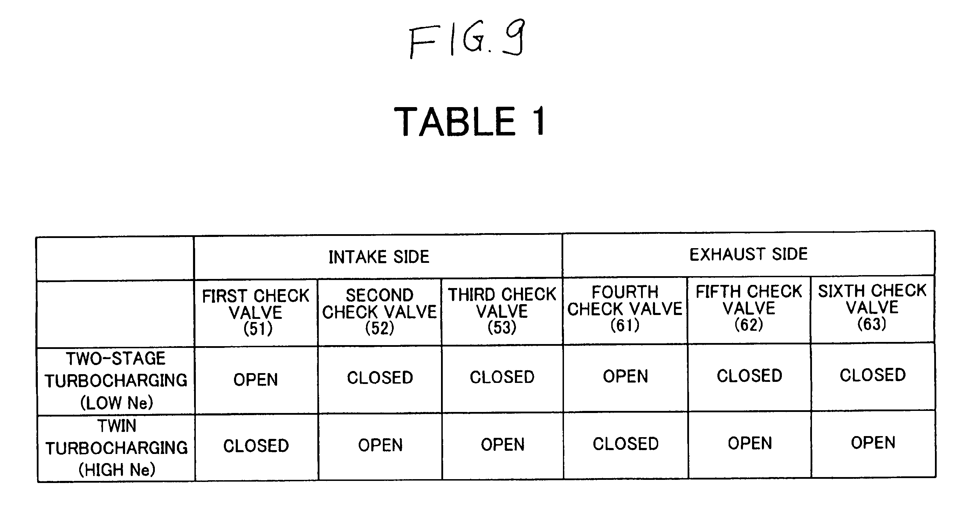

FIG. 9 is a table 1 showing the open/closed state of each check valve.

DETAILED DESCRIPTION OF THE PREFERRED EMBODIMENTS

In the following description and the accompanying drawings, the present invention will be described in more detail in terms of exemplary embodiments. A first exemplary embodiment of the invention will first be explained with reference to FIG. 1, which is an example construction of a turbocharging system according to the first exemplary embodiment.

Referring to the drawing, the turbocharging system includes an engine 150, an air cleaner 10, a catalytic converter 80, a low pressure turbocharger 41 and a high pressure turbocharger 42 (hereinafter, "turbocharger" will simply be referred to as "TC"). The low pressure TC 41 and the high pressure TC 42 each include a turbine and a compressor. The low pressure TC 41 and high pressure TC 42 both are so-called variable capacity systems which include a variable nozzle (not shown), for example, which is beneficial in various ways. For example, when the variable nozzle opening is made narrower, the boost pressure increases which enables engine torque to be increased. Conversely, when the variable nozzle opening is made wider, back pressure of the engine 150 is reduced which enables fuel efficiency to be improved.

The engine 150, or the low pressure TC 41 and the high pressure TC 42 and the like, is connected by various pipes as follows. First, the intake side will be described. The air cleaner 10 is connected to a main intake pipe 20 which is shown by bold lines in FIG. 1. This main intake pipe 20 is connected to a compressor of the low pressure TC 41, a low pressure intercooler 24, a compressor of the high pressure TC 42, a high pressure intercooler 25, and an intake valve (not shown) of the engine 150. A first check valve 51 (corresponding to an example of the "turbocharging flow cut-off valve" in this invention) is provided in the main intake pipe 20 between the low pressure intercooler 24 and the inlet of the compressor of the high pressure TC 42.

A low pressure side intake bypass 21 and a high pressure side intake bypass 22 are connected to the main intake pipe 20. Of these, the low pressure side intake bypass 21 branches off from the main intake pipe 20 between the air cleaner 10 and the inlet of the compressor of the low pressure TC 41, and then connects again to the main intake pipe 20 between the first check valve 51 and the inlet of the compressor of the high pressure TC 42. A second check valve 52 (corresponding to an example of the "low pressure side turbocharging flow bypass opening and closing valve" in this invention) is provided in the low pressure side intake bypass 21. The high pressure side intake bypass 22, on the other hand, branches off from the main intake pipe 20 between the low pressure intercooler 24 and the first check valve 51, and then connects again to the main intake pipe 20 between the outlet of the compressor of the high pressure TC 42 and the high pressure intercooler 25. A third check valve 53 (corresponding to an example of the "high pressure side turbocharging flow bypass opening and closing valve" in this invention) is provided in the high pressure side intake bypass 22.

The arrangement shown in FIG. 1 enables the low pressure intercooler 24 and the high pressure intercooler 25 to be suitably cooled with the air coming out of the compressor of either the low pressure TC 41 or the high pressure TC 42.

Next, the exhaust side will be described. An exhaust valve (not shown) of the engine 150 is connected to a main exhaust pipe 30 shown by a bold line in FIG. 1. The main exhaust pipe 30 is connected to a turbine of the high pressure TC 42, a turbine of the low pressure TC 41 and the catalytic converter 80. A fourth check valve 61 (corresponding to an example of the "cut-off valve" in this invention) is provided in the main exhaust pipe 30 between the outlet of the turbine of the high pressure TC 42 and the inlet of the turbine of the low pressure TC 41.

A high pressure side bypass 31 and a low pressure side bypass 32 are connected to the main exhaust pipe 30. Of these, the high pressure side bypass 31 branches off from the main exhaust pipe 30 between the engine 150 and the inlet of the turbine of the high pressure TC 42, and then connects again to the main exhaust pipe 30 between the fourth check valve 61 and the inlet of the turbine of the low pressure TC 41. A fifth check valve 62 (corresponding to an example of the "high pressure side bypass opening and closing valve" in this invention) is provided in the high pressure side bypass 31. The low pressure side bypass 32, on the other hand, branches off from the main exhaust pipe 30 between the outlet of the turbine of the high pressure TC 42 and the fourth check valve 61, and then connects again to the main exhaust pipe 30 between the outlet of the turbine of the low pressure TC 41 and the catalytic converter 80. A sixth check valve 63 (corresponding to an example of the "low pressure side bypass opening and closing valve" in this invention) is provided in the low pressure side bypass 32.

Of the aforementioned structures, the engine 150 and the first through the sixth check valves 51, 52, 53, 61, 62, and 63 are connected to a control unit 170. Further, the control unit 170 is connected, for example, to an engine speed sensor (not shown) provided near the engine 150, which detects the speed of the engine 150; an accelerator opening amount sensor (not shown) provided near an accelerator pedal (not shown), which detects the opening amount of the accelerator pedal; and an airflow meter (not shown) that detects the quantity of intake air flowing into the main intake pipe 20. The control unit 170 controls the combustion mode of the fuel in the engine 150 and the valve opening and closing timing and the like, as well as the opening and closing of each of the first through the sixth check valves 51, 52, 53, 61, 62, and 63, to be described later.

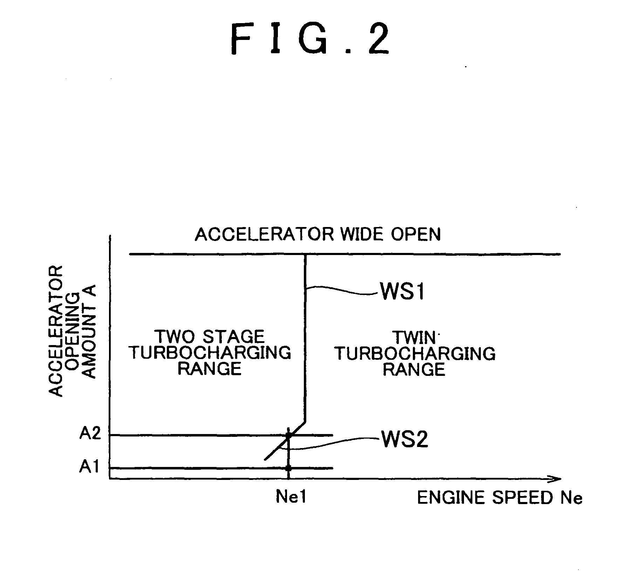

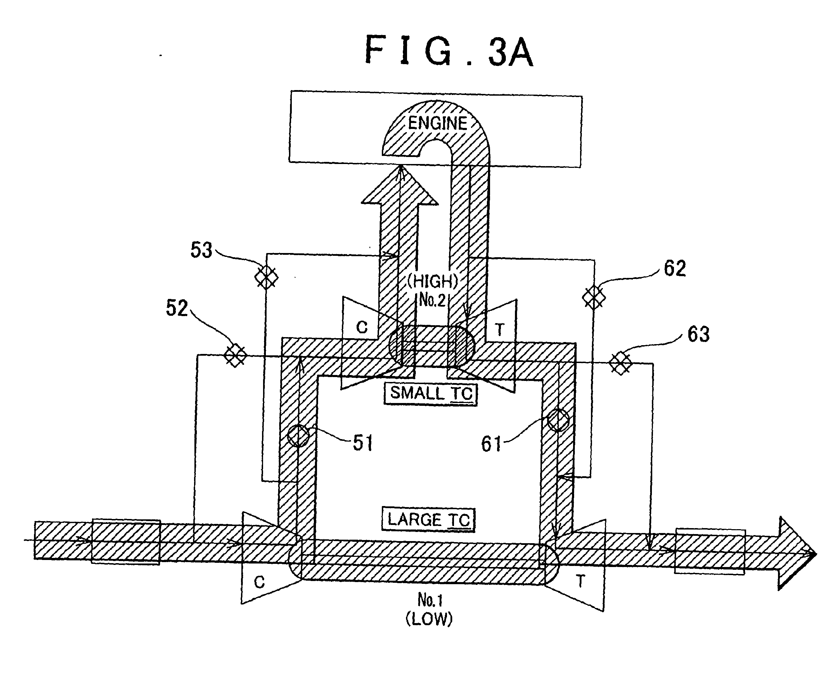

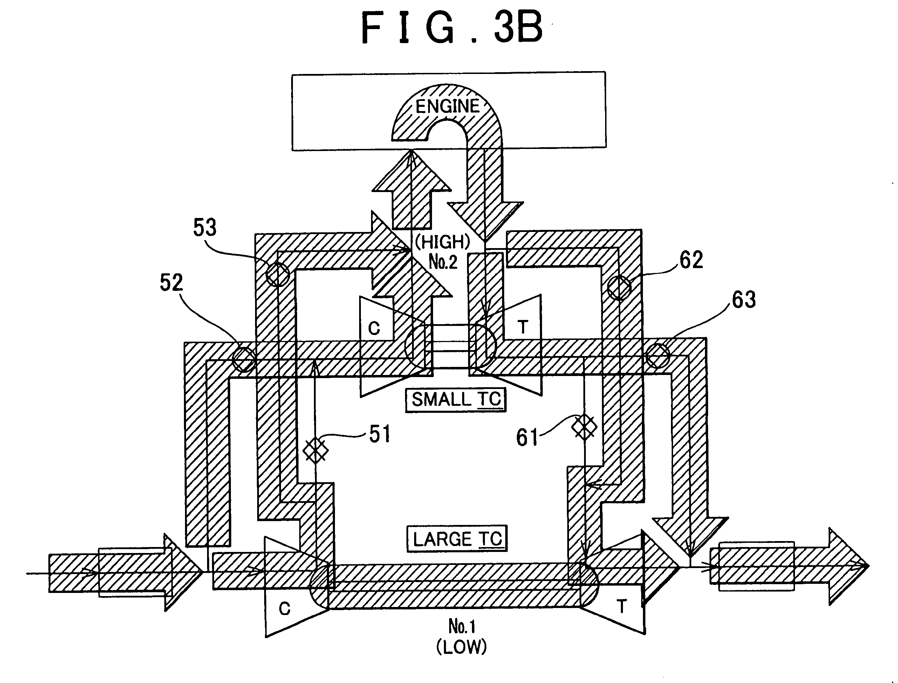

The turbocharging system of the above structure operates as shown in FIGS. 2 and 3, for example, and is able to achieve the following effects. FIG. 2 is a view illustrating the criteria for switching between two-stage turbocharging and twin turbocharging in the turbocharging system shown in FIG. 1. FIG. 3A and FIG. 3B are views illustrating the turbocharging modes realized with the turbocharging system shown in FIG. 1, with FIG. 3A showing two-stage turbocharging and FIG. 3B showing twin turbocharging.

First, the turbocharging system according to this exemplary embodiment fundamentally operates in two ranges, the two-stage turbocharging range and the twin turbocharging range, as shown in FIG. 2. "Two-stage turbocharging" here means turbocharging realized by a flow of air using the main intake pipe 20 and the main exhaust pipe 30, and not the bypasses 21, 22, 31, and 32 shown in FIG. 1. More specifically, the open and closed states of the check valves 51 through 53 and 61 through 63 are as shown in the two-stage turbocharging column of table 1. As a result, the flow of air in the turbocharging system is as shown by the area marked by hatching in FIG. 3A. On the other hand, "twin turbocharging" means turbocharging realized by the flow of air using the bypasses 21, 22, 31, and 32 shown in FIG. 1. More specifically, the open and closed states of the check valves 51 through 53 and 61 through 63 are as shown in the twin turbocharging column of table 1. As a result, the flow of air in the turbocharging system is as shown by the area marked by hatching in FIG. 3B.

While two-stage turbocharging and twin turbocharging both perform turbocharging with the low pressure TC 41 and the high pressure TC 42, the two types of turbocharging differ in the following ways. That is, with two-stage turbocharging, the exhaust gas from the engine 150 first passes through the turbine of the high pressure TC 42, thereby rotating it, and then flows through the main exhaust pipe 30 and the fourth check valve 61 and into the turbine of the low pressure TC 41. With twin turbocharging, on the other hand, the exhaust gas from the engine 150 passes through the high pressure side bypass 31 and the fifth check valve 62 and flows directly into the turbine of the low pressure TC 41.

FIG. 2 shows that an accelerator opening amount A and an engine speed Ne are used to determine which of the two ranges the turbocharging system is operating in.

That is, in FIG. 2, in general twin turbocharging is performed in the turbocharging system in the high engine speed Ne range, i.e., when the engine 150 is revolving at high speed, while two-stage turbocharging is performed in the turbocharging system in the low engine speed Ne range, i.e., when the engine 150 is revolving at low speed. In this case, the accelerator opening amount A fundamentally does not have an effect on what range the turbocharging system is operated in (see the straight line portion denoted by reference characters WS1 in FIG. 2).

Determining whether to use two-stage turbocharging or twin turbocharging based on the engine speed Ne in this way makes it is possible to increase the engine efficiency more than when another determination method is used. This is because in the high engine speed Ne range, the exhaust flow path is large so back pressure is reduced. Also, on the intake side as well, in the high engine speed Ne range, the flow of intake air meets no sequential resistance in the two-stages of the low pressure TC 41 and the high pressure TC 42, so pressure loss can be minimized.

Also in the first exemplary embodiment, when the accelerator opening amount A is comparatively small, that accelerator opening amount A is the determining factor for which of the two ranges (i.e., two-stage turbocharging or twin turbocharging) the turbocharging system is operated in, as shown by the bent line portion WS2 which is connected to the straight line portion WS 1 in FIG. 2. That is, for example, if the engine speed is "Ne 1" and the accelerator opening amount is "A1", then twin turbocharging is performed. On the other hand, even if the engine speed is "Ne 1", if the accelerator opening amount is "A 2" (> A 1), then two-stage turbocharging is performed.

Selecting between the two ranges according to the bent line portion WS2 shown in FIG. 2 has the following advantages. That is, the bent line portion WS2 bends at the portion where the accelerator opening amount A is relatively small, i.e., where the load is relatively light. It is therefore conceivable that in this area turbocharging is not that necessary. From this point of view, in this area, there is no real need to perform two-stage turbocharging, which is more powerful, and no real problems will occur if twin turbocharging is performed. Further, by performing twin turbocharging, the area of the exhaust gas flow path is increased, which reduces pressure loss. Therefore, twin turbocharging, rather than two-stage turbocharging, is actually more preferable in the case where the accelerator opening amount A is relatively small.

The exemplary embodiment thus enables both turbocharging to be more effective when the engine speed is low, and the pressure loss to be small when the engine speed is high.

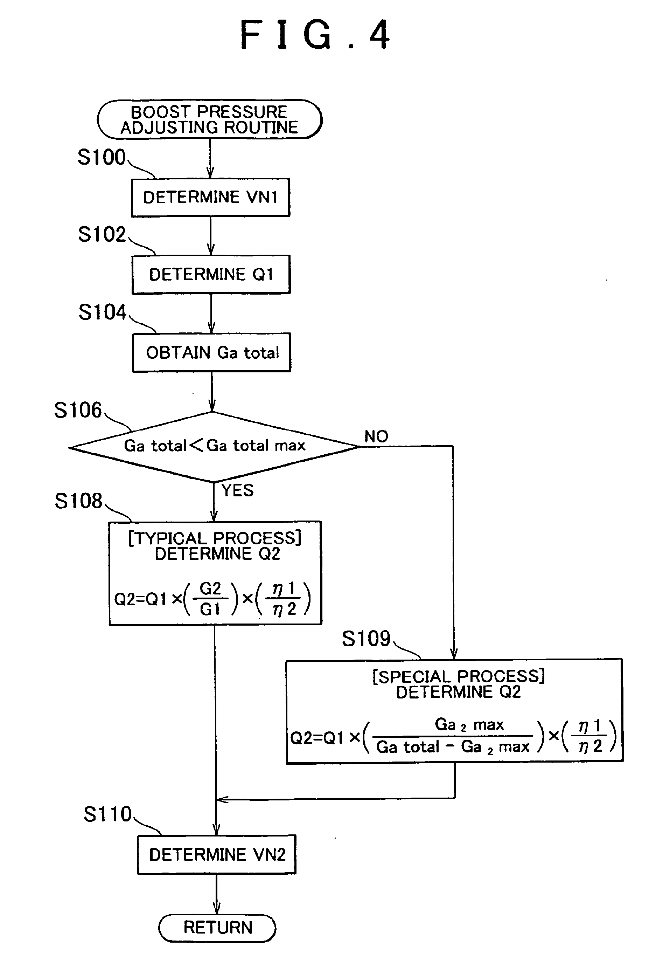

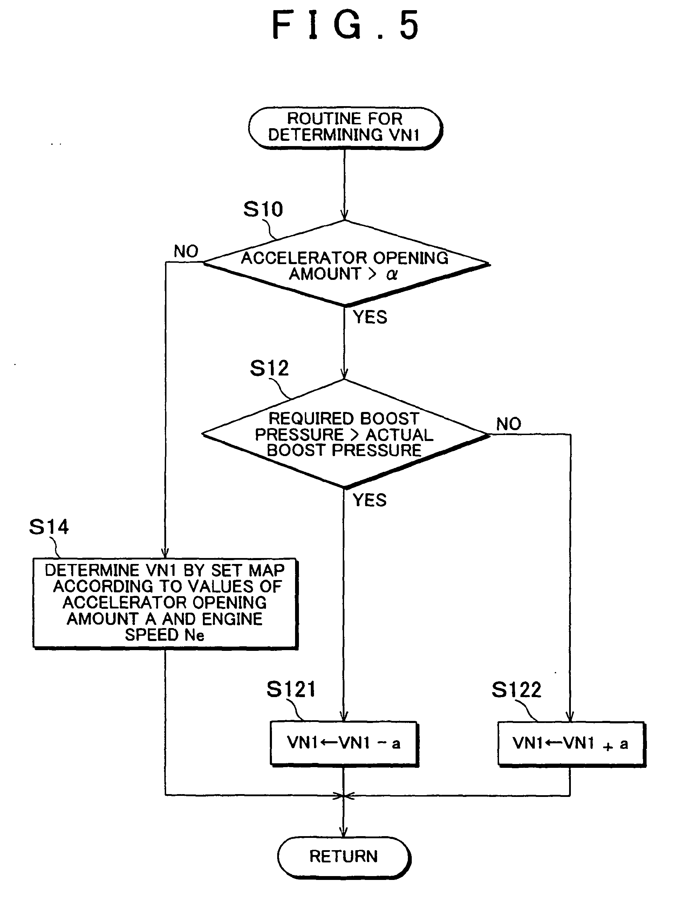

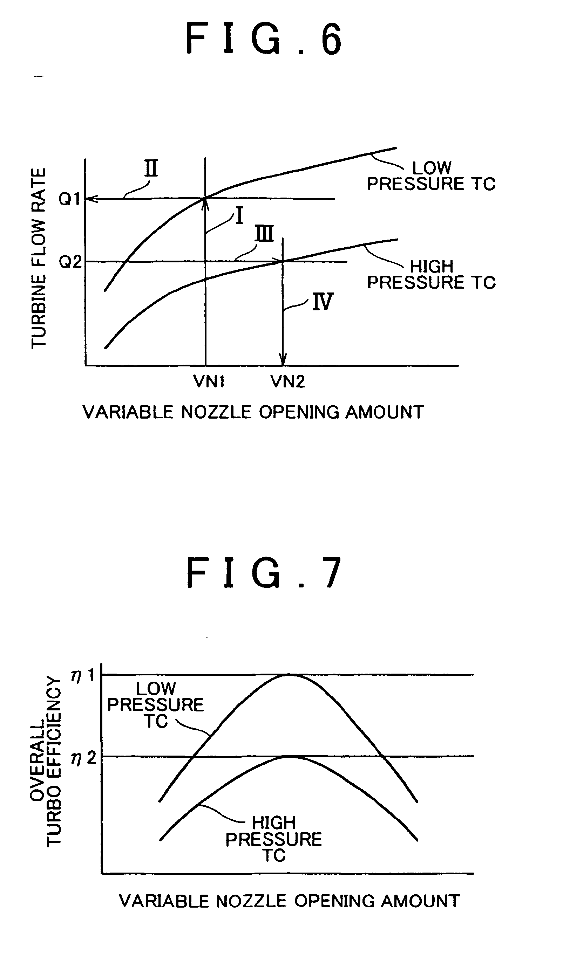

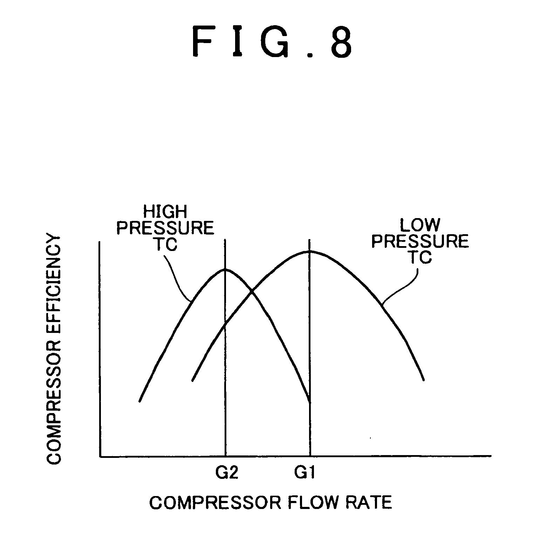

Next, a second exemplary embodiment of the invention will be described with reference to FIGS. 4 to 8. FIG. 4 is a flowchart showing the flow in a boost pressure adjusting routine according to the second exemplary embodiment of the invention. FIG. 5 is a flowchart showing the flow of a process corresponding to step S 100 in FIG. 4, i.e., a routine for determining an opening amount VN1 of a variable nozzle of the low pressure TC. FIG. 6 is a graph showing the change in the turbine flow rate in response to a change in the variable nozzle opening amount. FIG. 7 is a graph showing the change in the overall turbocharger efficiency in response to a change in the variable nozzle opening amount. FIG. 8 is a graph showing the change in the compressor efficiency in response to a change in the compressor flow rate. FIGS 6 to 8 each show curved lines corresponding to the low pressure TC 41 and the high pressure TC 42. These characteristics graphs are fundamentally set uniquely for a particular low pressure TC 41 and high pressure TC 42, so the shape of the curved lines in each graph changes depending on the model and structure and the like of the unit. FIGS. 6 to 8 each have an abstract and general quality that shows characteristics common to the plurality of fundamentally individual and specific characteristics graphs.

In the following description, only the characteristic structure of the second exemplary embodiment will be described. A description of the structure and basic operation of the turbocharging system will be simplified or omitted because it is the same as that described in the first exemplary embodiment. Further, the same reference numerals used in the drawings referenced in the first exemplary embodiment will be used to denote the same parts in the drawings referenced in the second exemplary embodiment.

The second exemplary embodiment has a characteristic of adjusting the boost pressure of he low pressure TC 41 and the high pressure TC 42. That is, in the turbocharging system according to this exemplary embodiment, both the two-stage turbocharging and the twin turbocharging can be realized, as described above. In particular, when realizing two-stage turbocharging, it is necessary to differentiate between the large (large capacity) TC and the small (small capacity) TC, such as with the low pressure TC 41 and the high pressure TC 42. In this exemplary embodiment, the lower capacity TC is the high pressure TC 42 and the larger capacity TC is the low pressure TC 41. At the same time, however, with twin turbocharging it is preferable that the boost pressures of the low pressure TC 41 and the high pressure TC 42 be the same. In the second exemplary embodiment, in order to meet both of these needs, a control is executed to make the boost pressures the same by adjusting the variable valves in the low pressure TC 41, which has the smaller capacity, and the high pressure TC 42, which has the larger capacity, when twin turbocharging is being performed.

First, in FIG. 4, the opening amount VN1 of the variable nozzle of the low pressure TC 41 is determined according to the operating state of the engine 150, i.e., according to the required boost pressure (step S100 in FIG. 4).

The determination of the VN1 can be made as shown in FIG. 5, for example. First it is determined whether the accelerator opening amount A is over a predetermined value $\alpha$ (step S 10 in FIG. 5). If the accelerator opening amount A is over the predetermined value $\alpha$, it is then determined whether the required boost pressure is larger or smaller than the actual boost pressure (step S 12 in FIG. 5). If the required boost pressure is greater than the actual boost pressure, a predetermined value a is subtracted from the current opening amount VN1 of the variable nozzle in order to make the variable nozzle opening smaller (step S121 in FIG. 5; VN1 ← VN1 - a). If, on the other hand, the required boost pressure is equal to, or less than, the actual boost pressure, the predetermined value a is added to the current opening amount VN1 of the variable nozzle in order to make the variable nozzle opening larger (step S121 in FIG. 5; VN1 ← VN1 + a). Thus, when the accelerator opening amount A exceeds the predetermined value $\alpha$ (typically, when the accelerator opening amount A nears the maximum value), a more appropriate boost pressure can ultimately be determined by performing control (feedback control of the boost pressure) for obtaining the VN1 by adding or subtracting the predetermined value a. On the other hand, if the accelerator opening amount A is equal to, or less than, the predetermined value $\alpha$ in step S 10 in FIG. 5, the opening amount VN1 of the variable nozzle is obtained according to an appropriate map (not shown) set beforehand according to the values of the accelerator opening amount A and the engine speed Ne for each type of VN1.

Once the opening amount VN1 of the variable nozzle of the low pressure TC 41 is determined in this way, a turbine flow rate Q1 of the low pressure TC 41 is determined from FIG. 6 (step S 102 in FIG. 4; see arrows I and II in FIG. 6).

Next, a total intake air quantity Ga total measured near the air cleaner 10 in FIG. 1 is obtained using an airflow meter, for example (step S104 in FIG. 4). It is then determined whether this intake air quantity Ga total is equal to Ga total max, which has the following meaning (step S 106 in FIG. 4).

"Ga total max" refers to the following. First, because the high pressure TC 42 has lower capacity than does the low pressure TC 41, the maximum value of the compressor flow rate achievable with the high pressure TC 42 is less than the maximum value of the compressor flow rate achievable with the low pressure TC 41 (see FIG. 8). Therefore, in the turbocharging system shown in FIG. 1, the compressor flow rate of the high pressure TC 42 is capable of reaching the maximum value $Ga_2 max$ when the intake air quantity Ga is equal to, or greater than, a predetermined value. This predetermined value, that is, the intake air quantity when the compressor flow rate of the high pressure TC 42 in FIG. 1 reaches the maximum value $Ga_2 max$, can be calculated beforehand as "Ga total max".

For example, this Ga total max can be obtained in the following manner. First, the intake air quantity Ga total, the flow rate $Ga_1$ in the low pressure TC 41, and the flow rate $Ga_2$ in the high pressure TC 42 can be expressed as follows.

$$[\text{Expression 1}] \quad Ga\ total = Ga_1 + Ga_2$$

When the $Ga_2$ in this expression becomes $Ga_2max$ (i.e., $Ga_2 = Ga_2max$), Ga total equals Ga total max, as described above, so if the $Ga_1$ at this time is expressed as $Ga_1max$, Expression 1 above can be rewritten as follows.

$$[\text{Expression 2}] \quad Ga\ total\ max = Ga_1max + Ga_2max$$

Here, the two terms on the right side of Expression 2 have the following relationship (the basis for this will be explained after the expression).

$$[\text{Expression 3}] \quad Ga_1max\ /\ Ga_2max = G1\ /\ G2$$

$$[\text{Expression 4}] \quad \therefore\ Ga_1max = Ga_2max \times (G1\ /\ G2)$$

Here, G1 and G2 are expressed as parallel straight lines along a vertical axis that includes the highest values of the curved lines indicating the compressor efficiencies of the low pressure TC 41 and the high pressure TC 42. That is, G1 and G2 correspond to the compressor flow rates for the low pressure TC 41 and the high pressure TC 42, respectively, when the compressor efficiencies are at the highest values.

If Expression 4 is substituted for Expression 2, the following expression results.

$$[\text{Expression 5}] \quad Ga\ total\ max = Ga_2max \times (G1\ /\ G2 + 1)$$

If a specific value for $Ga_2max$ in Expression 5 is obtained by simulation, theoretical calculation, or experiment, or the like, the specific value for Ga total max can be set beforehand based on that.

Expression 4 works because it is assumed that a "typical process", which will be described later, is being executed in the turbocharging system in FIG. 1. That is, as will be described in detail later, in the second exemplary embodiment, two different processes, i.e., the typical process and a special process, are carried out in order to obtain the turbine flow rate Q2 of the high pressure TC 42 or the opening amount VN2 of the variable nozzle. Which of these two processes is carried out depends on whether the compressor flow rate of the high pressure TC 42 is equal to the maximum value $Ga_2max$. The special process corresponds to a process executed when the compressor flow rate of the high pressure TC 42 is equal to the maximum value $Ga_2max$. The conditions for this are just such that this kind of literally special or less frequently executed process is carried out. Conversely, when the adjusting routine according to the second exemplary embodiment is being performed at predetermined intervals of time, for example (such as every several microseconds ($\mu$s) to several hundred microseconds ($\mu$s)), the number of cases in which the compressor flow rate of the high pressure TC 42 does not reach the maximum value $Ga_2max$, from among the total number of times the process is executed, is thought to be extremely high. In these cases, because control is executed based on Expression 6, to be described later, the relationship between the intake air quantities Ga1 and Ga2 of the low pressure TC 41 and the high pressure TC 42, respectively, is typically (G1 / G2) = ($Ga_1$ / $Ga_2$), so it can be assumed that (Ga1 / G2) = $Ga_1max$ / $Ga_2max$). In this way, Expression 4 is established based on the fact that the adjusting routine according to the second exemplary embodiment has already started and it is assumed that the "typical process", to be described later, is being executed.

In step S 106 in FIG. 4, it is determined whether the actual measured intake air quantity Ga total is equal to Ga total max determined in this way (i.e., whether Ga total = Ga total max). Ultimately, this is substantially equivalent to determining whether the compressor flow rate of the high pressure TC 42 is equal to the maximum value $Ga_2max$. If Ga total < Ga total max, i.e., if the compressor flow rate of the high pressure TC 42 has not yet reached the maximum

value $Ga_2max$, the "typical process" is executed (i.e., the routine proceeds from step S 106 to step S 108 in FIG. 4). If not, i.e., if the compressor flow rate of the high pressure TC 42 has reached the maximum value $Ga_2max$, the "special process" is executed (i.e., the routine proceeds from step S106 to step S 109 in FIG. 4). In this way, the different processes for adjusting the boost pressure are performed.

First, the typical process of step S 108 in FIG. 4 will be described. This typical process refers to a sequence for obtaining the turbine flow rate Q2 that should be achieved by the high pressure TC 42. That is, the turbine flow rate Q2 of the high pressure TC 42 can be obtained from the turbine flow rate Q1 and the characteristics graphs in FIGS. 7 and 8 (step S 108 in FIG. 4). Expression 6 below can be used at this time.

$$[\text{Expression 6}] \quad Q2 = Q1 \times (G2 / G1) \times (\eta 1 / \eta 2)$$

The terms $\eta 1$ and $\eta 2$ in FIG. 7 are expressed here as parallel straight lines along a horizontal axis that includes the highest value of the curved lines indicating the overall turbocharger efficiencies of the low pressure TC 41 and the high pressure TC 42. That is, the terms $\eta 1$ and $\eta 2$ correspond to the maximum overall turbocharger efficiencies achievable in the low pressure TC 41 and the high pressure TC 42. The overall turbocharger efficiency here is proportionate to the quotient of the boost pressure increase amount divided by the exhaust gas energy. On the other hand, G1 and G2 are obtained from FIG. 8, as already described in the section on the calculation method of Ga total max.

According to this kind of typical process, the turbine flow rate Q2 can be obtained from Expression 6 above so, in more general terms, the ratio of the turbine flow rate Q1 of the low pressure TC 41 to the turbine flow rate Q2 of the high pressure TC 42 can be set to maintain an intake air quantity ratio (i.e., G2 / G1) in which the compression efficiencies of the low pressure TC 41 and the high pressure TC 42 are at the maximum. This enables both the low pressure TC 41 and the high pressure TC 42 to operate with the same level of efficiency (in other words, there will not be a case in which one TC is operating at a high efficiency while the other TC is operating at a low efficiency). This typical process can be a process that is literally "typically" or highly frequently executed in the routine for adjusting the boost pressure by adjusting the opening amounts VN1 and VN2 of the variable nozzle.

Next, the special process of step S 109 in FIG. 4 will be described. The sequence for obtaining the turbine flow rate Q2 of the high pressure TC 42 from the turbine flow rate Q1 of the low pressure TC 41 in this special process is the same as that of the typical process. However, the special process differs from the typical process in that it is executed when Ga total $\geq$ Ga total max (see step S 106 in FIG. 4) and the compressor flow rate of the high pressure TC 42 has reached the maximum value $Ga_2max$, i.e., when it has become difficult to make adjustments on the high pressure TC 42 side.

In the special process, Expression 7 below is used instead of Expression 6 above to obtain the turbine flow rate Q2.

$$[\text{Expression 7}] \quad Q2 = Q1 \times Ga_2max / (Ga\ total - Ga_2max) \times (\eta 1 / \eta 2)$$

Expression 7 is based on the following. First, $Ga_2 = Ga_2max$ is maintained when the compressor flow rate of the high pressure TC 42 reaches the maximum value $Ga_2max$.
That is, the turbine flow rate Q2 is obtained to realize Expression 8 below.

$$[\text{Expression 8}] \quad Ga\ total = Ga_1 + Ga_2max$$

Therefore, the numerator G2 in (G2 / G1) in Expression 6 is substituted with $Ga_2max$ in Expression 7, and the denominator G1 is substituted with $Ga_1 = Ga\ total - Ga_2max$ which can be obtained by changing (transposing) Expression 8.

According to this kind of special process, because the compressor flow rate of the high pressure TC 42 becomes the maximum value $Ga_2max$, even when that control becomes difficult to execute, it is possible to achieve what should originally be achieved by the control of the opening amount VN2 of the variable nozzle of the high pressure TC 42 using the low pressure TC 41 instead. That is, even if the high pressure TC 42 is difficult to control, it is still possible to dependably control the boost pressure to the required level. The special process can be made a process that is literally "specially" or less frequently carried out in the process to adjust the boost pressure by adjusting the opening amounts VN1 and VN2 of the variable nozzle, as described above (this is because it is thought that Ga total $\geq$ Ga total max will not occur that frequently).

By performing either the typical process or the special process as described above, the opening amount FN2 of the variable nozzle of the high pressure TC 42 is obtained from FIG. 6 when the desired turbine flow rate Q2 is set for the high pressure TC 42. (step S110 in FIG. 4; see arrows III and IV in FIG. 6).

Finally, if the actual variable nozzles in the low pressure TC 41 and high pressure TC 42 are controlled based on the obtained opening amounts VN1 and VN2 of the variable nozzles, the boost pressures at the outlets of the compressors of both the low pressure TC 41 and the high pressure TC 42 can be made substantially equal.

As described above, whether or not the compressor flow rate of the high pressure TC 42 is equal to the maximum value $Ga_2max$ is determined in step S 106 in FIG. 4 by monitoring the intake air quantity Ga total. The invention, however, is not limited to this. Alternatively, a first method may be employed in which the rotation speed of the high pressure TC 42 is detected, and it is determined whether the compressor flow rate has reached the maximum value $Ga_2max$ based on whether the rotation speed is above a predetermined value. Or, a second method may be employed in which a flowmeter is provided in the flow path of only the high pressure TC 42, and it is determined whether the compressor flow rate has reached the maximum value $Ga_2max$ based on whether the measured value obtained by the flowmeter is above a predetermined value.

A turbocharging system includes a low pressure turbocharger (41) and a high pressure turbocharger (42); a cut-off valve (61) that cuts off communication between an outlet of a turbine of the high pressure turbocharger and an inlet of a turbine of the low pressure turbocharger; a high pressure side bypass (31) which bypasses the turbine of the high pressure turbocharger and the cut-off valve and introduces exhaust gas into the turbine of the low pressure turbocharger; a high pressure side bypass opening and closing valve (62) provided in the high pressure side bypass (31); a low pressure side bypass (32) which bypasses the cut-off valve and the turbine of the low pressure turbocharger and introduces exhaust gas downstream of the turbine of the low pressure turbocharger; and a low pressure side bypass opening and closing valve (63) provided in the low pressure side bypass (32).

**Claims**

1. A turbocharging system including a low pressure turbocharger (41) and a high pressure turbocharger (42), comprising :
   a cut-off valve (61) that cuts off communication between an outlet of a turbine of the high pressure turbocharger (42) and an inlet of a turbine of the low pressure turbocharger (41);
   a high pressure side bypass (31) which bypasses the turbine of the high pressure turbocharger (42) and the cut-off valve (61) and introduces a flowing fluid which operates the turbocharging system into the turbine of the low pressure turbocharger (41);
   a high pressure side bypass opening and closing valve (62) provided in the high pressure side bypass (31);
   **characterised by** further comprising
   a low pressure side bypass (32) which bypasses the cut-off valve (61) and the turbine of the low pressure turbocharger (41) and introduces the flowing fluid downstream of the turbine of the low pressure turbocharger (41); and
   a low pressure side bypass opening and closing valve (63) provided in the low pressure side bypass (32).

2. The turbocharging system according to claim 1, **characterised by** further comprising:

   a turbocharging flow cut-off valve (51) that cuts off communication between an outlet of a compressor of the low pressure turbocharger (41) and an inlet of a compressor of the high pressure turbocharger (42);
   a low pressure side turbocharging flow bypass (21) which bypasses the compressor of the low pressure turbocharger (41) and the turbocharging flow cut-off valve (51) and introduces a turbocharging flowing fluid into the compressor of the high pressure turbocharger (42);
   a low pressure side turbocharging flow bypass opening and closing valve (52) provided in the low pressure side turbocharging flow bypass (21);
   a high pressure side turbocharging flow bypass (22) which bypasses the turbocharging flow cut-off valve (51) and the compressor of the high pressure turbocharger (42), and introduces the turbocharging flowing fluid downstream of the compressor of the high pressure turbocharger (42); and
   a high pressure side turbocharging flow bypass opening and closing valve (53) provided in the high pressure side turbocharging flow bypass (22).

3. The turbocharging system according to claim 2, **characterised in that** an engine (150) which is turbocharged by the low pressure turbocharger (41) and the high pressure turbocharger (42) is further provided in the turbocharging system; and when the speed of the engine (150) is equal to, or greater than, a predetermined speed, the cut-off valve (61) and the turbocharging flow cut-off valve (51) close and the high pressure side bypass opening and closing valve (62), the low pressure side bypass opening and closing valve (63), the high pressure side turbocharging flow bypass opening and closing valve (53), and the low pressure side turbocharging flow bypass opening and closing valve (52) open.

4. The turbocharging system according to claim 3, **characterised in that** the predetermined speed is set according to the load on the engine (150).

5. The turbocharging system according to claim 3, **characterised in that** the predetermined speed is a constant speed when the load on the engine (150) is heavy, and a lower speed than the constant speed when the load on the engine (150) is light.

6. The turbocharging system according to any one of claims 1 to 5, **characterised in that** the high pressure turbocharger (42) has a lower capacity than does the low pressure turbocharger (41); and controlling means (170) is further provided in the turbocharging system for adjusting boost pressures of the high pressure turbocharger (42) and the low pressure turbocharger (41) so as to keep the ratio of a turbocharging flowing fluid quantity for the high pressure turbocharger (42) to the turbocharging flowing fluid quantity for the low pressure turbocharger (41) equal to the ratio of a turbocharging flowing fluid quantity with which the compression efficiency is the greatest for the high pressure turbocharger (42) to the turbocharging flowing fluid quantity with which the compression efficiency is the greatest for the low pressure turbocharger (41).

7. The turbocharging system according to claim 6, **characterised in that**, when more turbocharging is required after the turbocharging flowing fluid quantity supplied to the high pressure turbocharger (42) has reached a predetermined upper limit quantity, the boost pressure of the high pressure turbocharger (42) and the boost pressure of the low pressure turbocharger (41) are adjusted so that the turbocharging flowing fluid quantity supplied to the high pressure turbocharger (42) is fixed at the predetermined upper limit quantity.

**Patentansprüche**

1. Turboladesystem mit einem Niederdruckturbolader (41) und einem Hochdruckturbolader (42), umfassend:

ein Sperrventil (61), das eine Verbindung zwischen einem Ausgang einer Turbine des Hochdruckturboladers (42) und einem Einlass einer Turbine des Niederdruckturboladers (41) unterbricht;
eine Hochdruckseite-Bypassleitung (31), die die Turbine des Hochdruckturboladers (42) und das Sperrventil (61) umgeht und ein Strömungsfluid, das das Turboladesystem betreibt, in die Turbine des Niederdruckturboladers (41) leitet; und
ein Hochdruckseite-Bypassleitung-Öffnungs- und Schließventil (62), das in der Hochdruckseite-Bypassleitung (31) angeordnet ist;
**dadurch gekennzeichnet, dass** es ferner umfasst:

eine Niederdruckseite-Bypassleitung (32), die das Sperrventil (61) und die Turbine des Niederdruckturboladers (41) umgeht und das strömende Fluid strömungsabwärts der Turbine des Niederdruckturboladers (41) einleitet; und
ein Niederdruckseite-Bypassleitungs-Öffungs- und Schließventil (63), das in der Niederdruckseite-Bypassleitung (32) angeordnet ist.

2. Turboladesystem nach Anspruch 1, **dadurch gekennzeichnet, dass** es ferner umfasst:

ein Turboladestrom-Sperrventil (51), der eine Verbindung zwischen einem Ausgang eines Kompressors des Niederdruckturboladers (41) und einem Einlass eines Kompressors des Hochdruckturboladers (42) unterbricht;
eine Niederdruckseite-Turboladeströmungs-Bypassleitung (21), die den Kompressor des Niederdruckturboladers (41) und das Turboladestrom-Sperrventil (51) umgeht und das Turboladeströmungsfluid in den Kompressor des Hochdruckturboladers (42) einleitet;
ein Niederdruckseite-Turboladeströmungs-Bypassleitungs-Öffnungs- und Schließventil (52), das in der Niederdruckseite-Turboladeströmungs-Bypassleitung (21) angeordnet ist;
eine Hochdruckseite-Turboladeströmungs-Bypassleitung (22), die das Turboladestrom-Sperrventil (51) und den Kompressor des Hochdruckturboladers (42) umgeht und das Turboladeströmungsfluid strömungsabwärts des Kompressors in den Hochdruckturbolader (42) einleitet; und

ein Hochdruckseite-Turboladeströmungs-Bypassleitungs-Öffnungs- und Schließventil (53), das in der Hochdruckseite-Turboladeströmungs-Bypassleitung (22) angeordnet ist.

3. Turboladesystem nach Anspruch 2, **dadurch gekennzeichnet, dass** ferner ein Motor (150), der durch den Niederdruckturbolader (41) und den Hochdruckturbolader (42) aufgeladen wird, in dem Turboladesystem angeordnet ist, und dass, wenn die Drehzahl des Motors (150) gleich hoch wie oder höher als eine vorbestimmte Drehzahl ist, das Sperrventil (61) und das Turboladestrom-Sperrventil (51) schließen und das Hochdruckseite-Bypassleitungs-Öffnungs- und Schließventil (62), das Niederdruckseite-Bypassleitungs-Öffnungs- und Schließventil (63), das Hochdruckseite-Turboladeströmungs-Bypassleitungs-Öffnungs- und Schließventil (53) und das Niederdruckseite-Turboladeströmungs-Bypassleitungs-Öffnungs- und Schließventil (52) schließen.

4. Turboladesystem nach Anspruch 3, **dadurch gekennzeichnet, dass** die vorbestimmte Drehzahl entsprechend der Last des Motors (150) eingestellt wird.

5. Turboladesystem nach Anspruch 3, **dadurch gekennzeichnet, dass** die vorbestimmte Drehzahl eine konstante Drehzahl ist, wenn die Last des Motors (150) hoch ist, und eine niedrigere Drehzahl als die konstante Drehzahl ist, wenn die Last des Motors (150) niedrig ist.

6. Turboladesystem nach einem der Ansprüche 1 bis 5, **dadurch gekennzeichnet, dass** der Hochdruckturbolader (42) eine niedrigere Kapazität als der Niederdruckturbolader (41) hat, und dass ferner ein Regelungs- bzw. Steuerungsmittel (170) in dem Turboladesystem vorgesehen ist, um Ladedrücke des Hochdruckturboladers (42) und des Niederdruckturboladers (41) so einzustellen, dass das Verhältnis einer Turboladeströmungsfluidmenge für den Hochdruckturbolader (42) zu der Turboladeströmungsfluidmenge für den Niederdruckturbolader (41) gleich groß ist wie das Verhältnis einer Turboladeströmungsfluidmenge, mit der der Kompressionswirkungsgrad der höchste für den Hochdruckturbolader (42) ist, zu der Turboladeströmungsfluidmenge, mit der der Kompressionswirkungsgrad der größte für den Niederdruckturbolader (41) ist.

7. Turboladesystem nach Anspruch 6, **dadurch gekennzeichnet, dass**, wenn eine stärkere Aufladung erforderlich ist, nachdem die Turboladeströmungsfluidmenge, die dem Hochdruckturbolader (42) zugeführt wird, eine vorbestimmte obere Grenzmenge erreicht hat, der Ladedruck des Hochdruckturboladers (42) und der Ladedruck des Niederdruckturboladers (41) so eingestellt werden, dass die dem Hochdruckturbolader (42) zugeführte Turboladeströmungsfluidmenge bei der vorbestimmten oberen Grenzmenge festgelegt wird.

**Revendications**

1. Système de suralimentation incluant un turbocompresseur basse pression (41) et un turbocompresseur haute pression (42) comprenant :

   une soupape de coupure (61) qui coupe la communication entre une sortie d'une turbine du turbocompresseur haute pression (42) et une entrée d'une turbine du turbocompresseur basse pression (41) ;
   une dérivation côté haute pression (31) qui évite la turbine du turbocompresseur haute pression (42) et la soupape de coupure (61) et introduit un fluide s'écoulant qui fait fonctionner le système de suralimentation dans la turbine du turbocompresseur basse pression (41) ;
   une soupape d'ouverture et de fermeture de dérivation côté haute pression (62) placée dans la dérivation côté haute pression (31) ;
   **caractérisé en ce qu'**il comprend en outre :

      une dérivation côté basse pression (32) qui évite la soupape de coupure (61) et la turbine du turbocompresseur basse pression (41) et introduit le fluide s'écoulant en aval de la turbine du turbocompresseur basse pression (41) ; et
      une soupape d'ouverture et de fermeture de dérivation côté basse pression (63) placée dans la dérivation côté basse pression (32).

2. Système de suralimentation selon la revendication 1, **caractérisé en ce qu'**il comprend en outre :

   une soupape de coupure d'écoulement de suralimentation (51) qui coupe la communication entre une sortie d'un compresseur du turbocompresseur basse pression (41) et une entrée d'un compresseur du turbocompresseur haute pression (42) ;

une dérivation d'écoulement de suralimentation côté basse pression (21) qui évite le compresseur du turbocompresseur basse pression (41) et la soupape de coupure d'écoulement de suralimentation (51) et introduit un fluide s'écoulant de suralimentation dans le compresseur du turbocompresseur haute pression (42) ;

une soupape d'ouverture et de fermeture de dérivation d'écoulement de suralimentation côté basse pression (52) placée dans la dérivation d'écoulement de suralimentation côté basse pression (21) ;

une dérivation d'écoulement de suralimentation côté haute pression (22) qui évite la soupape de coupure d'écoulement de suralimentation (51) et le compresseur du turbocompresseur haute pression (42), et introduit le fluide s'écoulant de suralimentation en aval du compresseur du turbocompresseur haute pression (42) ; et

une soupape d'ouverture et de fermeture de dérivation d'écoulement de suralimentation côté haute pression (53) placée dans la dérivation d'écoulement de suralimentation côté haute pression (22).

3. Système de suralimentation selon la revendication 2, **caractérisé en ce qu'**un moteur (150) qui est suralimenté par le turbocompresseur basse pression (41) et le turbocompresseur haute pression (42) est en outre placé dans le système de suralimentation ; et quand la vitesse du moteur (150) est supérieure ou égale à une vitesse prédéterminée, la soupape de coupure (61) et la soupape de coupure d'écoulement de suralimentation (51) se ferment et la soupape d'ouverture et de fermeture de dérivation côté haute pression (62), la soupape d'ouverture et de fermeture de dérivation côté basse pression (63), la soupape d'ouverture et de fermeture de dérivation d'écoulement de suralimentation côté haute pression (53), et la soupape d'ouverture et de fermeture de dérivation d'écoulement de suralimentation côté basse pression (52) s'ouvrent.

4. Système de suralimentation selon la revendication 3, **caractérisé en ce que** la vitesse prédéterminée est réglée en fonction de la charge sur le moteur (150).

5. Système de suralimentation selon la revendication 3, **caractérisé en ce que** la vitesse prédéterminée est une vitesse constante quand la charge sur le moteur (150) est lourde, et une vitesse inférieure à la vitesse constante quand la charge sur le moteur (150) est légère.

6. Système de suralimentation selon l'une quelconque des revendications 1 à 5, **caractérisé en ce que** le turbocompresseur haute pression (42) a un débit inférieur à celui du turbocompresseur basse pression (41) ; et des moyens de commande (170) sont en outre placés dans le système de suralimentation pour ajuster des pressions de suralimentation du turbocompresseur haute pression (42) et du turbocompresseur basse pression (41) de façon à garder le rapport d'un débit de fluide de suralimentation pour le turbocompresseur haute pression (42) au débit de fluide de suralimentation pour turbocompresseur basse pression (41) égal au rapport d'un débit de fluide de suralimentation avec lequel le rendement de la compression est le plus grand pour le turbocompresseur haute pression (42) au débit de fluide de suralimentation avec lequel le rendement de la compression- est le plus grand pour le turbocompresseur basse pression (41).

7. Système de suralimentation selon la revendication 6, **caractérisé en ce que** quand plus de suralimentation est nécessaire après que le débit de fluide de suralimentation fourni au turbocompresseur haute pression (42) a atteint une valeur limite supérieure prédéterminée, la pression de suralimentation du turbocompresseur haute pression (42) et la pression de suralimentation du turbocompresseur basse pression (41) sont réglées de telle manière que le débit de fluide de suralimentation fourni au turbocompresseur haute pression (42) est fixé au débit limite supérieur prédéterminé.

EP 1 519 017 B1

# F I G . 1

# FIG.2

ACCELERATOR WIDE OPEN

ACCELERATOR OPENING AMOUNT A

TWO STAGE TURBOCHARGING RANGE

TWIN TURBOCHARGING RANGE

WS1

A2

WS2

A1

Ne1

ENGINE SPEED Ne

F I G . 3A

# FIG.3B

# FIG.4

BOOST PRESSURE
ADJUSTING ROUTINE

S100 — DETERMINE VN1

S102 — DETERMINE Q1

S104 — OBTAIN Ga total

S106 — Ga total < Ga total max — NO

YES

S108 — [TYPICAL PROCESS]
DETERMINE Q2

$$Q2 = Q1 \times \left(\frac{G2}{G1}\right) \times \left(\frac{\eta 1}{\eta 2}\right)$$

S109 — [SPECIAL PROCESS]
DETERMINE Q2

$$Q2 = Q1 \times \left(\frac{Ga_2\ max}{Ga\ total - Ga_2\ max}\right) \times \left(\frac{\eta 1}{\eta 2}\right)$$

S110 — DETERMINE VN2

RETURN

# F I G . 5

```
        ┌──────────────────┐
        │   ROUTINE FOR    │
        │ DETERMINING VN1  │
        └──────────────────┘
                 │
   S10           ▼
         ◇────────────────────◇
   NO   ╱  ACCELERATOR OPENING  ╲
  ◄─────   AMOUNT > α
         ╲                     ╱
          ◇───────────────────◇
                 │ YES
   S12           ▼
         ◇────────────────────◇
         ╱   REQUIRED BOOST     ╲   NO
         ╱  PRESSURE > ACTUAL    ╲─────►
         ╲  BOOST PRESSURE       ╱
          ◇───────────────────◇
                 │ YES
```

S14

```
┌─────────────────────────┐
│ DETERMINE VN1 BY SET MAP │
│ ACCORDING TO VALUES OF   │
│ ACCELERATOR OPENING      │
│ AMOUNT A AND ENGINE      │
│ SPEED Ne                 │
└─────────────────────────┘
```

S121                              S122

```
┌──────────────────┐        ┌──────────────────┐
│  VN1←VN1 - a     │        │  VN1←VN1 + a     │
└──────────────────┘        └──────────────────┘
```

```
        ┌──────────────┐
        │   RETURN     │
        └──────────────┘
```

# F I G . 6

# F I G . 7

# FIG.8

COMPRESSOR EFFICIENCY

HIGH
PRESSURE
TC

LOW
PRESSURE
TC

G2    G1

COMPRESSOR FLOW RATE

# FIG. 9

## TABLE 1

|  | INTAKE SIDE | | | EXHAUST SIDE | | |
|---|---|---|---|---|---|---|
|  | FIRST CHECK VALVE (51) | SECOND CHECK VALVE (52) | THIRD CHECK VALVE (53) | FOURTH CHECK VALVE (61) | FIFTH CHECK VALVE (62) | SIXTH CHECK VALVE (63) |
| TWO-STAGE TURBOCHARGING (LOW Ne) | OPEN | CLOSED | CLOSED | OPEN | CLOSED | CLOSED |
| TWIN TURBOCHARGING (HIGH Ne) | CLOSED | OPEN | OPEN | CLOSED | OPEN | OPEN |

EP 1 519 017 B1

**EP 1 519 017 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4136424 A

- JP 59082526 B